# DEMANDE DE BREVET EUROPEEN

(11) **EP 1 093 309 A1**
(43) Date de publication de la demande: **18.04.2001**
(21) Numéro de dépôt: 00402746.2
(22) Date de dépôt: 05.10.2000
(51) Int. Cl.: H04Q 1/14

(54) **Architecture de raccordement entre des équipements électroniques, informatiques, ou analogues**

(30) Priorité: 12.10.1999 FR 9912713
(71) Demandeur: FRANCE TELECOM, 75015 Paris (FR)
(72) Inventeur: Bennia-Latreche, Karim, 93380 Pierrefitte (FR)
(74) Mandataire: Armengaud Ainé, Alain

(57) **Abrégé**

Architecture de raccordement (1) entre des équipements (2) échangeant entre eux des données, caractérisée en ce qu'elle comporte au moins un équipement (2) muni d'une pluralité de voies, ces voies étant reliées à au moins un module de raccordement (4) par l'intermédiaire de premiers moyens de câblage (3), ledit module de raccordement (4) comprenant également des seconds moyens de câblage (11) reliés à au moins un commutateur électronique flexible (12) piloté par un logiciel permettant de gérer telle ou telle voie dudit équipement (2).

## Description

La présente invention est relative à une architecture de raccordement entre des équipements électroniques, informatiques, ou analogues, devant échanger des données ou des informations.

Elle vise plus particulièrement un dispositif communément appelé dans le domaine de la téléphonie sous le nom de "répartiteur" pour des applications relevant de l'informatique, de la transmission de données, aussi bien sous une technique numérique qu'analogique.

Le dispositif objet de l'invention est particulièrement destiné à une nouvelle architecture de raccordement de voies entre des équipements, tant du côté émission, que du côté réception.

De façon classique, les voies des équipements distincts sont à l'heure actuelle connectés entre eux par l'intermédiaire de réglettes sur lesquelles l'utilisateur vient raccorder des jarretières ou liens mobiles, afin de réaliser entre deux voies la continuité électrique.

Or, en cas de maintenance, aussi bien en termes d'ajouts que de suppression de voies, l'utilisateur est contraint d'intervenir localement sur le répartiteur pour effectuer une mise en place ou un retrait de liens mobiles.

Cette opération de mise en place ou de retrait de liens mobiles est délicate. En effet, l'utilisateur intervient sur un réseau sur lequel seules quelques voies sont concernées, les autres demeurant en fonctionnement et donc en service, ce qui risque localement de perturber des voies adjacentes.

Or, le fait d'intervenir sur quelques voies dans un environnement soumis à des tensions et courants électriques, risque de générer en raison de fausses manoeuvres liées par exemple au contact entre l'outil à raccorder et des points de connexion en service, des dysfonctionnements sur le réseau. Ce phénomène, s'il est gênant lorsque les voies affectées par ces dysfonctionnements véhiculent des transmissions téléphoniques classiques (communication entre deux usagers), est plus préoccupant lorsque ces voies sont destinées à des transmissions de données.

La présente invention vise donc à pallier ces inconvénients, en proposant un dispositif de répartiteur électronique qui autorise l'établissement à distance, de manière quasiment instantanée, d'une continuité électrique entre deux voies de communication, sans avoir à procéder à des interventions manuelles de montage ou de démontage de liens mobiles entre ces voies.

A cet effet, l'architecture de raccordement entre des équipements échangeant entre eux des données, se caractérise en ce qu'elle comporte au moins un équipement muni d'une pluralité de voies, ces voies étant reliées à au moins un module de raccordement par l'intermédiaire de premiers moyens de câblage, ledit module de raccordement comprenant également des seconds moyens de câblage reliés à au moins un système de commutation de voies piloté par un logiciel permettant de gérer telle ou telle voie dudit équipement.

D'autres caractéristiques et avantages de la présente invention ressortiront de la description faite ci-après, en référence aux dessins annexés qui en illustrent un exemple de réalisation dépourvu de tout caractère limitatif. Sur les figures :

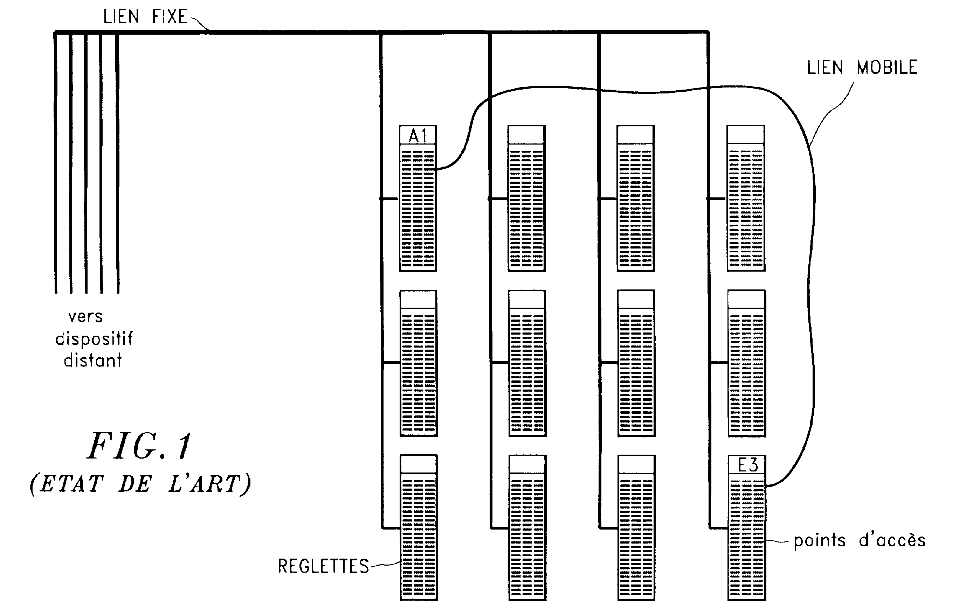

- la figure 1 illustre un mode de réalisation connu de l'art antérieur, permettant de relier entre eux différents équipements à l'aide de liens mobiles ;

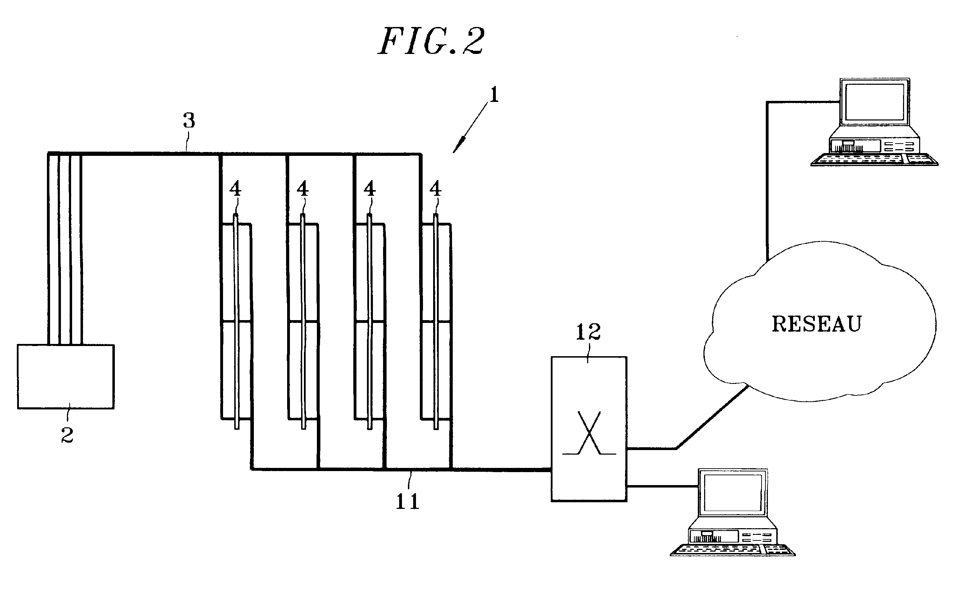

- la figure 2 illustre un mode de réalisation selon l'invention ;

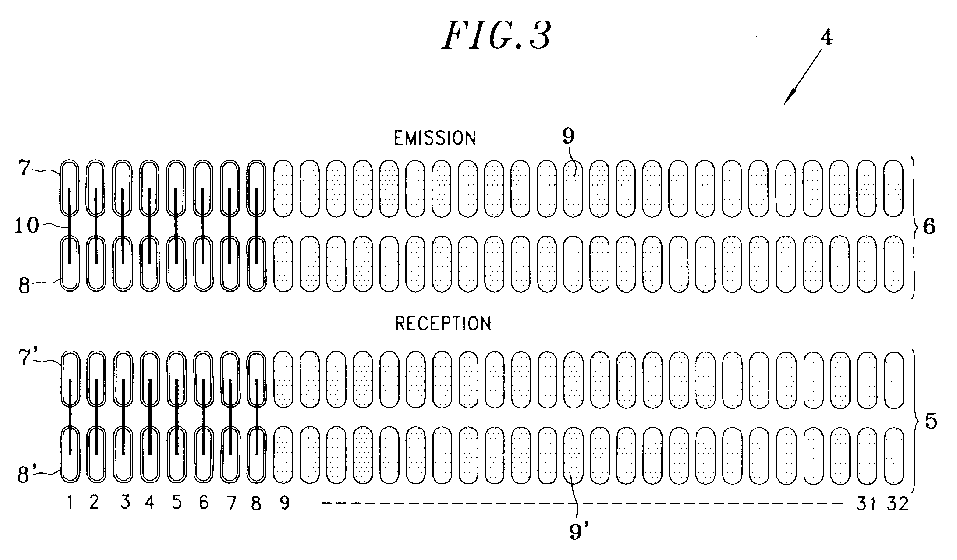

- la figure 3 est une vue à plus grande échelle d'un exemple de réalisation d'un module de connexion.

Selon un mode préféré de réalisation du dispositif, particulièrement destiné à la création d'une nouvelle architecture de raccordement bi-directionnel 1 entre les voies d'équipements 2, celle-ci comporte tout d'abord un ensemble de dispositifs 3, 4, 11, cheminant vers un commutateur électronique flexible 12. Ce dernier assure instantanément et éventuellement à distance, par simple commande de l'opérateur, la connexion électrique entre deux voies définies reliant des équipements 2. Sur cette architecture est relié au moins un équipement 2, lequel comprenant une pluralité de voies aboutissant à au moins un module de raccordement 4, par l'intermédiaire de premiers moyens de câblage fixes 3. Ces premiers moyens de câblage 3 sont connectés à une pluralité de modules 4 de connexion se présentant par exemple sous la forme d'une pluralité de platines montées sur un châssis d'armoire de répartition.

Chacun de ces modules 4 comporte une partie réception 5 et une partie émission 6, chacune des parties 5, 6 (émission et réception) se subdivisant en une zone 7 dédiée aux équipements 2 et une zone 8 dédiée aux commutateurs électroniques flexibles 12.

Chacune des zones 7, 8, 7', 8' (côté équipements 2 et côté commutateurs électroniques flexibles 12) dispose d'une pluralité de points 9 de raccordement, réalisés notamment sous la forme de dispositifs de connectiques couramment rencontrés dans le domaine des télécommunications (à broche, à pin, à encliquetage...), chacun de ces points définissant un nombre de voies pouvant être reliées, au travers de l'architecture de raccordement 1, aux équipements 2, à l'aide notamment d'au moins un commutateur électronique flexible 12.

Ainsi, par exemple, un module 4 peut comporter côté émission 6 : trente deux connecteurs 7 de raccordement destinés aux équipements 2 et trente deux connecteurs 8 dédiés aux commutateurs électroniques flexibles 12, chacun de ces connecteurs 7, 8 comprenant par exemple soixante trois voies ; cette configuration se retrouve à l'identique côté réception, sous la forme de connecteurs 7', 8'.

A l'aide de dispositifs de raccordement appropriés 10, l'utilisateur met en relation de façon rapide et fiable des premiers connecteurs 7, 7' (et donc des points de raccordement 9, 9') destinés aux équipements 2 avec des seconds connecteurs 8, 8' reliés aux Commutateurs Electroniques Flexibles 12, aussi bien du côté émission 6 que du côté réception 5, de manière à faire coïncider les voies provenant d'équipements 2 du côté émission 6 avec les voies provenant d'équipements 2 du côté réception 5 et réciproquement.

En conclusion, ces modules 4 comportent ainsi, d'une part des premiers moyens de câblage 3 provenant des équipements de commutation et/ou de transmission 2, d'autre part des dispositifs de raccordement appropriés 10 entre les divers connecteurs 7, 8, 7', 8'. Il convient donc de relier ceux-ci, par des seconds moyens de câblage 11, à au moins un commutateur électronique flexible 12 permettant d'affecter telle voie provenant d'un équipement 2, par l'intermédiaire des connecteurs 7, 8 du côté émission 6 à telle autre voie d'un autre équipement 2, par l'intermédiaire des connecteurs 7', 8' du côté réception 5, et réciproquement.

De plus, cette architecture 1, qui comporte notamment un commutateur électronique flexible 12 et dans la mesure où toutes les voies ne sont pas occupées, permet en cas de défaut sur l'une des voies reliant des équipements entre eux, de réacheminer la voie en défaut sur une voie libre, de manière à rétablir le réseau et former ainsi un réseau maillé.

L'affectation des équipements sur tel ou tel R.N.F. (Répartiteur Numérique Flexible ou autrement appelé Architecture 1) géré par le commutateur électronique flexible 12, est d'autant plus facile que l'utilisateur n'a pas à intervenir au niveau des connecteurs présents sur les divers modules, en modifiant, entre les connecteurs, les dispositifs de raccordement appropriés 10. Il suffit à l'utilisateur de renseigner un logiciel qui assure la gestion du commutateur électronique flexible 12, pour permettre l'affectation bidirectionnelle et éventuellement à distance, et par voie logicielle, de telle voie sur telle autre voie.

Cette architecture permet de déporter dans des salles d'exploitation toutes les tâches qui, dans l'état de la technique antérieure, devaient être réalisées au niveau des répartiteurs par l'adjonction ou la suppression de jarretières.

On peut ainsi créer, supprimer, modifier instantanément l'affectation d'une ou plusieurs continuités entre des voies reliant des équipements amont et des équipements aval.

Les risques de dysfonctionnement qui étaient initialement concentrés au niveau des répartiteurs se trouvent ainsi supprimés et seuls des problèmes concentrés au niveau de l'exploitation par voie logicielle peut affecter le raccordement entre les équipements.

L'invention telle que décrite précédemment offre de multiples avantages car elle permet d'augmenter le degré de fiabilité des réseaux, grâce à cette architecture de raccordement qui scinde de manière très nette la fonction raccordement des voies et la fonction affectation des voies, sans avoir recours à une modification d'un câblage.

En raison de l'utilisation d'un commutateur électronique flexible, il est possible de suppléer sur une autre partie du réseau, des équipements en dysfonctionnement, par une modification quasiment instantanée des affectations logicielles entre les voies reliant les équipements. Cette architecture offre également de multiples avantages en termes d'exploitation (validation des voies, synchronisation, tests...), de supervision, de télé-exploitation, de bases de données, et enfin en termes d'assainissement des salles de transmission.

Il demeure bien entendu que la présente invention n'est pas limitée aux exemples de réalisation décrits et représentés ci-dessus, mais qu'elle en englobe toutes les variantes.

## Revendications

1. Architecture de raccordement (1) entre des équipements (2) échangeant entre eux des données, caractérisée en ce qu'elle comporte :
- au moins un équipement (2) muni d'une pluralité de voies ;
- au moins un module de raccordement (4) auquel sont reliées lesdites voies par l'intermédiaire de premiers moyens de câblage (3), ledit module de raccordement (4) comprenant une partie réception (5) et une partie émission (6), chacune desdites parties (5, 6) se subdivisant en une zone (7) dédiée à des équipements (2) et une zone (8) dédiée à un commutateur électronique flexible (12), chacune desdites zones disposant d'une pluralité de premiers et seconds points de raccordement (9 ? 9') ;
- au moins un commutateur électronique flexible (12) relié au module de raccordement par des seconds moyens de câblage (11) et qui est piloté par un logiciel permettant de gérer telle ou telle voie dudit équipement (2) et
- des dispositifs de raccordement (10) mettant en relation les premiers points de raccordement (9) destinés aux équipements (2) avec les seconds points de raccordement (9') reliés aux commutateurs électroniques flexibles (12), tant du côté émission (6) que du côté réception (5).

2. Architecture (1) de raccordement selon la revendication 1, caractérisée en ce que lesdits premiers et seconds points de raccordement (9, 9') sont réalisés sous la forme de dispositifs de connectiques.
